# EUROPEAN PATENT SPECIFICATION

(11) **EP 3 241 855 B1**
(45) Date of publication and mention of the grant of the patent: **03.03.2021**
(21) Application number: 14909603.4
(22) Date of filing: 30.12.2014
(51) Int. Cl.: C08F 297/04, C08F 4/48

(54) **METHOD FOR PRODUCING BUTADIENE-STYRENE BLOCK COPOLYMERS**
VERFAHREN ZUR HERSTELLUNG VON BUTADIEN-STYROL-BLOCKCOPOLYMEREN
PROCÉDÉ DE PRODUCTION DE COPOLYMÈRE À BLOCS STYRÈNE-BUTADIÈNE

(43) Date of publication of application: 08.11.2017
(73) Proprietor: Public Joint Stock Company "Sibur Holding", Tyumen region 626150 (RU)
(72) Inventor: SITNIKOVA, Valentina Vasilievna, Voronezh 394000 (RU); MALYGIN, Alexei Viktorovich, Voronezh 394004 (RU); RACHINSKY, Aleksei Vladislavovich, Voronezh 394004 (RU); TKACHEV, Aleksei Vladimirovich, Voronezh 394028 (RU); BYKHUN, Yury Yurievich, Voronezhskaya obl. 394000 (RU)
(74) Representative: Zacco Denmark A/S
(86) International application number: PCT/RU2014/001008
(87) International publication number: WO 2016/108713

(56) References cited:
- EP-A1- 0 498 426
- EP-A2- 0 265 923
- WO-A2-03/044065
- RU-C- 1 838 335
- RU-C1- 2 126 422
- RU-C1- 2 140 934
- US-A1- 2013 157 069

## Description

### Technical field

The present invention relates to a method for producing butadiene-styrene block copolymers with an increased content of vinyl units in the polybutadiene block and can be used in the industry of synthetic rubbers and thermoplastics, and resulting block-copolymers are useful in the industry of polymerbituminous pavement, roofing and waterproof materials as a basic polymer for subsequent hydrogenation, and other fields of industry.

### Background

It is known (US 4,433,109, US 5,008,343, US 6,472,464) that random styrene-butadiene block copolymers having improved physical-mechanical and elastic-hysteresis properties by polymerization in the presence of an organolithium compounds and various ethylene glycol ethers, wherein the content of vinyl units is determined by polymerization temperature so that a low polymerization temperature leads to a high content of vinyl units, while a high temperature provides a low content of vinyl units in the resulting products.

A method is known (RU2134697) for producing butadienestyrene rubber with an increased content of 1,2-units in the polybutadiene part of the chain by co-polymerization of butadiene and styrene in a hydrocarbon solvent in the presence of an organolithium initiator, diethylene glycol diethyl ether and/or tetrahydrofurfuryl alcohol ether in the presence of divinylbenzene. The method provides rubbers with the preferable content of 1,2-vinyl units in the butadiene part, having styrene units at both ends of the polymer chain, and characterized by controlled elastic recovery and enhanced physical-chemical properties of vulcanized rubbers. However, this is a multistep method that allows the production of low styrene content (up to 15%) rubbers, and the use of divinylbenzene results in an increased gel formation.

It is known (WO 2005030821) that a conjugated diene polymer or a block copolymer with a high content of vinyl units of more than 40% was produced in cyclohexane the presence of *sec*butyllithium (BuLi) and a mixture of microstructure-controlling agents - 1,2-diethoxypropane and diethyl ether. However, secbutyllithium is unstable during storage, which makes it difficult to use in industry.

A known method for production of butadiene-styrene block copolymers comprises reaction of butadiene mixed with divinylbenzene in the presence of a polystyryllithium catalyst (US 4,399,260). In the known method, the living block copolymer is treated with diglyme or tetrahydrofuran to remove residual divinylbenzene. Copolymerization of butadiene and small amounts of divinylbenzene in the presence of polystyryllithium is carried out in cyclohexane at a temperature of 65°C.

However, the use of divinylbenzene leads to an increase in gel formation during the polymerization process and can lead to an uncontrolled increase in molecular weight, which adversely affects the equipment and the process duration.

A known method for producing polymers involves the use of conjugated dienes and vinyl aromatic compounds (RU2326895). Statistical butadiene-styrene copolymers are produced in the presence of an organolithium compound and dialkyl ethers of the formula R₁-O-CH₂-CH(R₃)-O-R₂, wherein R₁ and R₂ are independently alkyl moieties with different number of carbon atoms, selected from the group of: methyl, ethyl, n-isopropyl, as well as n-, *iso-, sec-* and *tert*-butyl, and the sum of the carbon atoms in both alkyl radicals, R₁ and R₂, is from 5 to 7; and R₃ is hydrogen, a methyl or ethyl group and an organic alkaline compound. The resulting polymers contain from 26 to 51% of 1,2-vinyl units. However, for the production a statistical distribution of the units, alkali metal alkoxides are additionally added to the reaction medium.

In EP0498426 a method of producing block copolymers of vinyl aromatic and diene monomers is described. This method includes sequential polymerization of styrene and butadiene in the presence of n-BuLi, wherein tetrahydrofuran is added to the stage of styrene polymerization. The product described in this patent is hydrogenated block copolymer containing epoxy groups, and, it contains ethylene, butylene and epoxidized butadiene units in addition to polyvinylaromatic units.

The closest technical solution is a method of producing butadiene-styrene block copolymers with an increased content of 1,2-vinyl units, for subsequent hydrogenation (SU 1367418).

The known method is carried out in a mixed solvent of cyclohexane and heptane at a ratio of 75:25 wt.%. A first polystyrene block is synthesized at the first step in the presence of sec-butyllithium (BuLi). At the second step, a mixture of butadiene and styrene monomers is fed to the "living" polystyryllithium at a certain ratio, and a modifier, such as tetrahydrofuran (THF), is dosed at a molar ratio of *sec*-BuLi:THF of 1:30. The process of polymerization is carried out for 3 hours at a temperature of 25°C, and then the temperature is raised to 65°C. The content of styrene blocks in the resulting butadiene-styrene block copolymers is from 20 to 40%. The polybutadiene blocks have predominantly a vinyl microstructure. The weight ratio of 1,2-vinyl units is from 41 to 72%. Further, the synthesized block copolymers are subjected to hydrogenation.

Drawbacks of this method are:
- the use of sec-butyllithium as an initiator, which is unstable during storage, thus making it difficult to use it in industry; in addition, the cost of sec-butyllithium is higher than that of alternative organolithium initiators;
- the use of tetrahydrofuran as a modifier, which provides an increased content of 1,2-vinyl units, requires its significant amounts (the molar ratio of *sec*-BuLi:THF is 1:30), while its control capacity is relatively low;
- the duration of synthesis of the second polybutadiene block is 3 hours at a temperature of 25°C, which requires considerable energy consumption.

The object of the present invention is the development of a method for producing butadiene-styrene block copolymers, which provides the production of butadiene-styrene block copolymers with an increased content of 1,2-vinyl units and a narrow molecular weight distribution, while reducing the consumption of polymerization modifiers and energy due to a substantial reduction in the process time.

The technical result of the present invention is the production of styrene-butadiene block copolymers with an increased content of 1,2-vinyl units and a narrow molecular weight distribution, while reducing both the consumption of polymerization modifiers and the process time, which is achieved by using as an initiator n-butyllithium in combination with THF and/or ethylene glycol dialkyl ethers used as modifiers at the step of styrene polymerization, and optionally diethylene glycol dialkyl ethers as modifiers at the step of production of a polybutadene block.

### DESCRIPTION OF THE INVENTION

The present invention relates to a method for producing butadiene-styrene block copolymers by copolymerization of styrene and butadiene in a hydrocarbon solvent in the presence of an organolithium initiator and a modifier, followed by treatment of "live" polymeric chains with a coupling agent, wherein in step (i), styrene polymerization is carried out in the presence of n-butyllithium and a modifier selected from the group consisting of tetrahydrofuran and ethylene glycol ethylbutyl ether to produce a polystyrene block of "living" polystyryllithium and, in step (ii), butadiene is added to the reaction mixture obtained in step (i), and synthesis of a polybutadiene block is carried out in the presence of a diethylene glycol dimethyl ether (diglyme) modifier , wherein said modifier is added after the beginning of the butadiene polymerization to produce a "living" polystyrenepolybutadienyllithium block copolymer.

The present invention also relates to a method for producing butadiene-styrene block copolymers by copolymerization of styrene and butadiene in a hydrocarbon solvent in the presence of an organolithium initiator and a modifier, followed by treatment of "live" polymer chains with a coupling agent, wherein in step (iii), the polystyrene-polybutadienyllithium block-copolymer produced in step (ii) is treated with a coupling agent, which is diphenyldichlorosilane and/or silicon tetrachloride, at a molar ratio of n-butyllithium:coupling agent of 1:(0.2-0.5).

The molar ratio of nbutyllithium to tetrahydrofuran in step (i) is 1:(0.3-2.0), more preferably 1:(0.3-0.8). The molar ratio of n-butyllithium to diethylene glycol dimethyl ether (diglyme) in step (ii) is 1:(0.25-1.50), more preferably 1:(0.25-0.50).

The modifier in step (i) a mixture of ethylene glycol ethylbutyl ether (EGEBE) with tetrahydrofuran (THF) added to the solvent in an amount of 0.005 to 0.02 wt.% at a molar ratio of BuLi:EGEBE:THF of 1:(0.1-0.5):(0.15-0.8).

According to the claimed method, step (i) the polymerization process of styrene is carried out in an adiabatic mode. In step (i), the temperature ranges from 25°C to 45°C, more preferably from 38 to 42°C, most preferably from 40 to 42°C. The duration of step (i) is not more than 30 minutes, and more preferably is from 15 to 30 minutes. Step (ii) of producing a polybutadiene block is carried out at a temperature of not more than 110°C, preferably the temperature ranges from 40 to 103°C, most preferably from 47 to 80°C, and the duration of step (ii) is not more than 40 minutes, preferably is from 30 to 40 minutes.

According to the present invention, the modifier in step (ii) is preferably added into the reaction mixture when its temperature is increased by 5-20°C.

The hydrocarbon solvent used in the claimed method is a mixture of cyclohexane/hexane or cyclohexane/petroleum solvent (nefras) at a weight ratio of from 25/75 to 35/65.

The coupling agent used in the present invention in the step of coupling the polystyrene-polybutadienyllithium block copolymer produced in step (ii) is preferably diphenyldichlorosilane and/or silicon tetrachloride at a molar ratio of n-butyllithium:coupling agent of 1:(0.2-0.5). In particular, the mole ratio of n-butyllithium: diphenyldichlorosilane is 1:(0.2-0.5), more preferably 1:(0.3-0.5). When silicon tetrachloride is used, the ratio of n-butyllithium:silicon tetrachloride is 1:(0.2-0.25), more preferably 1:(0.2-0.22).

The invention is illustrated by the following experimental examples.

### Example 1

A 13L reactor equipped with a stirring device and a system of temperature control and supplying an inert gas, reagent-inlet and polymer-outlet tubes was charged at a temperature of 25°C with 4500 ml (3330 g) of a dried solvent (a mixture of cyclohexane and nefras, 70:30 wt.%), 20 ml (20 mmol) of a 1M solution of tetrahydrofuran in hexane, 200 g of dried styrene, and 20 ml (20 mmol) of a 1M solution of n-butyllithium in hexane. Step (i) of styrene polymerization is carried out in adiabatic mode for 15-30 minutes to a temperature of 38-42°C. Then, in step (ii) of synthesis, the reactor was charged at temperature of 42°C with 2300 ml of a 30% solution of butadiene batch containing 465 g of butadiene. The temperature of the reaction mixture first decreased by 2-4°C due to the supplied cooled (2-4°C) charge, and once butadiene was frontally initiated and its polymerization started, the temperature of the reaction mixture began to increase, and at 47°C, the reactor was dosed with 50 ml of 0,2 m (10 mmol) of a solution of diethylene glycol dimethyl ether (diglyme) in hexane.

The butadiene polymerization was carried out for 40 minutes, and the maximum temperature reached 80°C. At the end of the butadiene polymerization reaction, the reactor was dosed with 12 mL of a coupling agent, which was a 0.5 M solution of diphenyldichlorosilane (6.0 mmol, i.e. 12 mmol based on Cl). The crosslinking of the "living" polymer chains was performed for 10-15 minutes at a temperature of 75-80°C. Sampling was then made to determine the degree of monomer conversion, microstructure and molecular weight characteristics of the polymer. The reactor was cooled to a temperature of 38-40°C, and the resulting polymer solution was discharged into a container that was filled with 20 ml of a 10% solution of antioxidant Agidol-1 (2,2- methylenebis(4-methyl-6-tert-butylphenol)). The polymer was then recovered from the stabilized solution by aqueous degassing and was dried in a drying chamber at a roll surface temperature of 70-75°C for 3 hours.

### Example 2

The synthesis was carried out as in Example 1, except that the reactor was dosed in step (i) with 6 ml of a 1M solution of tetrahydrofuran (THF) in hexane, and after feeding butadiene charge in step (ii), with 35 ml of 0.2M solution (7 mmol) of diethylene glycol dimethyl ether (diglyme) at 58°C. The solvent was cyclohexane:nefras, 65:35 wt.%.

### Example 3

The synthesis was carried out as in Example 1, except that the reactor was dosed in step (i) with 40 mL of a 1M solution of tetrahydrofuran (THF) in hexane, and after feeding butadiene charge in step (ii), with 25 ml 0.2M diglyme solution at 40°C. The solvent was cyclohexane:nefras, 75:25 wt.%. Once the butadiene polymerization reaction was complete, 22 ml of a 0.2 M solution of silicon tetrachloride (SiCl₄) were dosed.

### Example 4 (comparative)

The synthesis was carried out as in Example 1, except that 40 ml of a 1M solution of tetrahydrofuran (THF) in hexane were added in step (i), and diglyme was not added in step (ii).

### Example 5 (comparative)

The synthesis was carried out as in Example 4, except that 35 ml of a 0.2M diglyme solution were added in step (i), and THF was not added in step (i).

### Example 6 (comparative)

The synthesis was carried out as in Example 1, except that 25 ml of a 0.2M diglyme solution were added in step (i), and 25 ml of a 0.2M diglyme solution were dosed in step (ii).

**Table 1.**

| | | | | | | | | | | | | |
|---|---|---|---|---|---|---|---|---|---|---|---|---|
| Synthesis conditions and properties of butadiene-styrene block copolymers | | | | | | | | | | | | |

| Example, No | Temperature of block II polymerization, °C | | | Molar ratio | | | | Micriostructure (IRC data) of polybutadiene part | | Molecular characteristics (GPC data) | | |
|---|---|---|---|---|---|---|---|---|---|---|---|---|
| | Butadien e feeding, T1 | Diglyme feeding , T2 | T2-T1 | THF: nBuLi | Diglyme : nBuLi | CA:n - BuLi | Weight ratio of bound styren e | Weight ratio of 1,2-vinyl units | Weight ratio of 1,4-trans | Mw·10 - 3 | M_{w}/Mₙ | Homo-polystyrene % |
| 1 | 42 | 47 | 5 | 1.0 | 0.50 | 0.3 dds | 30 | 60 | 30 | 75 | 1.22 | 2.0 |
| 2 | 38 | 58 | 20 | 0.3 | 0.35 | 0.5 dds | 30 | 43 | 35 | 105 | 1.20 | 1.9 |
| 3 | 40 | 55 | 15 | 2.0 | 0.25 | 0.22 SiCL₄ | 50 | 35 | 42 | 180 | 1.35 | 2.1 |
| 4 (comp.) | 42 | - | - | 2.0 | - | 0.4 dds | 30 | 17 | 49 | 85 | 1.18 | 1.6 |
| 5 (comp.) | 42 | - | - | - | 0.35 in step (i) | 0.3 dds | 28 | 48 | 34 | 65 | 2.8 | 25 |
| 6 | 42 | 47 | 5 | - | 0.25 in step (i) 0.25 in | 0.3 dds | 28 | 52 | 32 | 62 | 2.9 | 27 |
| | | | | | step (ii) | | | | | | | |
| 11 (prototype ) | 20 | THF-20 | | THF/sec -BuLi 30.5 | - | | 40.5 | 41 | 1,4 units - 59 | 95 | | |

| | | | | | | | | | | | | |
|---|---|---|---|---|---|---|---|---|---|---|---|---|
| - Synthesis in step (ii) at a temperature of 25°C lasted for 3 hours - Solvent was cyclohexane:nefras, (65-75) : (35-25) wt.%. Loaded amount of monomers was 465 g (styreme:butadiene, 30:70 wt.%). Concentration of polysterene block in step (i) was 5.7 wt.%, total concentration of monomers was 11.4%. - dds - diphenyldichlorosilane | | | | | | | | | | | | |

The experimental data presented in Table 1 show that when in steps (i) and (ii) only diglyme alone was used as a modifier (Examples 5 and 6), a high value of 1,2-vinyl units was achieved; however, a high content of homo-polystyrene (more than 25%) contained in the resulting product was indicative that the cross-linking between polystyrene blocks and a polybutadiene blocks had not occurred, thus providing a mixture of polymers that did not exhibit thermoplastic elastomer properties.

The use of only THF (Example 4) as a modifier in step (i) makes it possible to produce thermoplastic elastomer (TPE) with a narrow molecular weight distribution (MWD) and high physical-mechanical characteristics; however, THF is not efficient enough as a 1,2-vinyl unit controlling agent. The use of only THF as a modifier of n-butyllithium did not provide TPE with an increased content of 1,2-vinyl units under the selected synthesis conditions (the maximum temperature of about 85°C, polymerization time of 40 minutes). The resulting block copolymer has a narrow MWD (M_{w/}Mₙ=1.18), a low content of homo-polystyrene, and exhibited thermoplastic elastomer properties.

When THF was used as a modifier in step (i) and diglyme was used as a modifier in step (ii), the resulting butadiene-styrene thermoplastic elastomers had an increased content of vinyl units (up to 60%) with a polydispersity of 1.20-1.35.

### Example 7

The volume of the reactor used for synthesis was 30 m³. The loaded amount of monomers was 2.6 tons with a total residue of 17.5%. A modifier (ethylene glycol ethylbutyl ether), n-butyllithium, and styrene were serially fed into the reactor after feeding a solvent containing THF in an amount of 0.01 wt.%. Polymerization of the first polystyrene block took 15 minutes at a temperature of 26°C to 45°C. The reaction mixture then was cooled to 41°C, and butadiene was fed. The maximum temperature of butadiene polymerization was 103°C, and the polymerization time was 30 min. Once the temperature decreased to 95°C, diphenyldichlorosilane (DPDHS) as a coupling agent was dosed. The crosslinking took 10 minutes.

### Example 8

The synthesis was carried out as described in Example 7, except that THF was not used in the process.

### Example 9

The synthesis was carried out as described in Example 7, except that the reactor was dosed with 0.02 wt.% THF, 2.69 kg of n-butyllithium, and 0.613 kg of ethylene glycol ethylbutyl ether (EGEBE). In the crosslinking step, 1.79 kg of SiCl₄ was introduced.

### Example 10

The synthesis was carried out as described in Example 8, except that 2.475 kg of EGEBE was added. In the crosslinking step, 1.92 kg of SiCl₄ was added.

### Comparative example 11 (according to prototype)

A 6L reactor equipped with a jacket for coolant and heat-carrying medium, a stirring device, an inlet tube for a solvent, monomers, a catalyst, a randomizer, and nitrogen, a thermometer well, and a discharge unit was charged with a mixture of 225 g of styrene and 2000 ml of a mixed solvent (cyclohexane and heptane at a ratio of 75:25), and 0.018 mol of sec-butyllithium was fed under stirring. Styrene polymerization was carried out under dry nitrogen atmosphere at 50°C for 1 hour. A mixture of 75 g of styrene and 450 g of butadiene, as well as 0.55 mol tetrahydrofuran (THF) for the fed sec-butyllithium, and 2000 ml of a mixed solvent were fed into the resulting solution of polystyrylithium (first block) at 20°C. The temperature of the reaction mixture was maintained at 25°C for 3 hours, and then the polymerization temperature was raised to 65°C, and the reaction mixture was maintained at this temperature until the monomers were consumed. The solution of the block copolymer was then hydrogenated, treated with hydrochloric acid, washed with distilled water, and the block copolymer was precipitated with acetone and dried (see Table 1).

The synthesis conditions for the butadiene-styrene block copolymers (Examples 7-10) and the microstructure of the polybutadiene block are shown in Table 2; the ratio of cyclohexane solvent:nefras was 70:30 wt.%.

**Table 2**

| Index | Value | | | |
|---|---|---|---|---|
| Example, No | 7 | 8 | 9 | 10 |
| Batch of monomers, kg | 2600 | 2600 | 2600 | 2600 |
| Cyclohexane/nefr as mixture, kg | 12250 | 1225 0 | 1225 0 | 1225 0 |
| Ethylene glycol ethylbutyl ether, kg mol | 4.12 | 6.38 | 0.613 | 2.475 |
| | 28.3 | 43.7 | 4.2 | 16.95 |
| Tetrahydrofuran, content in solvent, wt.% | 0.01 | - | 0.02 | - |
| kg | 1.225 | - | 2.45 | - |
| mol | 17.0 | - | 34.0 | - |
| Styrene, kg | 780 | 780 | 780 | 780 |
| Butadiene-1,3, kg | 1800 | 1800 | 1800 | 1800 |
| n-BuLi, kg | 3.616 | 3.616 | 2.69 | 3.616 |
| n-BuLi, kg mol | 3.616 | 3.616 | 2.69 | 3.616 |
| | 56.5 | 56.5 | 42.0 | 56.5 |
| DPDCS, kg mol | 4.37 | 4.37 | - | - |
| | 17.3 | 17.3 | - | - |
| SiCl₄, kg mol | | | 1.79 | 1.92 |
| | | | 10.5 | 11.3 |
| | | | | |
| Polymerization conditions | | | | |
| Ethylene glycol ethylbutyl ether/[Li], mol | 0.5 | 0.8 | 0.1 | 0.3 |
| THF/[Li], mol | 0.3 | - | 0.8 | - |
| Molar ratio of DPDCS/BuLi | 0.3 | 0.3 | - | - |
| Molar ratio of SiCl_{4/}BuLi | - | - | 0.25 | 0.25 |
| Step (i) : initiation temperature, °C Polymerization time, min | 27 | 26 | 26 | 26 |
| | 15 | 20 | 20 | 25 |
| Step (ii) : initiation temperature, °C Max temperature, °C Time, min | 41 | 40 | 41 | 42 |
| | 103 | 95 | 98 | 100 |
| | 30 | 40 | 40 | 40 |
| Microstructure | | | | |
| Weight ratio of 1,2-units, % | 55 | 52 | 30 | 32 |
| Weight ratio of bound styrene, % | 29.6 | 29.7 | 29.6 | 29.8 |
| Molecular weight characteristics | | | | |
| Mₙ*10⁻³ | 71 | 72 | 146 | 120 |
| M_{w}*10⁻³ | 80 | 85 | 190 | 160 |
| Mₙ/M_{w} | 1.14 | 1.18 | 1.3 | 1.33 |
| Weight ratio of block copolymers, % | 6.2 | 6.1 | 2.0 | 4.0 |
| Weight ratio of homopolystyrene, % | 1.1 | 1.3 | 1.2 | 1.2 |
| TPE properties | | | | |
| Inherent viscosity, | 1.1 | 1.1 | 1.4 | 1.2 |
| length/g | | | | |
| Relative tensile strength, MPa | 25.0 | 24.3 | 23.0 | 23.0 |
| Breaking elongation, % | 800 | 800 | 780 | 700 |
| Rate of set, % | 14 | 15 | 14 | 15 |
| Shore A hardness, r.u. | 74 | 70 | 78 | 76 |
| Rebound elasticity, % | 50 | 52 | 45 | 46 |
| Brookfield viscosity 25%, solution in toluene | 4.0 | 5.0 | 25 | 17 |

The experimental data presented in the table show that the use in step (i) of ethylene glycol ethylbutyl ether as a modifier or the use of only ethylene glycol ethylbutyl ether allows step (ii) to be carried out without a modifier to produce styrene-butadiene copolymers with a high content of vinyl units, having a narrow molecular weight distribution and high physic-mechanical characteristics.

## Claims

1. A method for producing butadiene-styrene block copolymers by copolymerization of styrene and butadiene in a hydrocarbon solvent in the presence of an organolithium initiator and a modifier, followed by treatment of "live" polymer chains with a coupling agent, **characterized in that** in step (i) styrene polymerization is carried out in the presence of n-butyllithium and a modifier selected from the group consisting of tetrahydrofuran and ethylene glycol ethylbutyl ether to produce a polystyrene block of "living" polystyryllithium, and
in step (ii) butadiene is added to the reaction mixture obtained in step (i), and synthesis of a polybutadiene block is carried out in the presence of a diethylene glycol dimethyl ether (diglyme) modifier, wherein said modifier is added after the beginning of the butadiene polymerization to produce "living" polystyrene-polybutadienyllithium block copolymer.

2. The method according to claim 1, wherein in step (i) a molar ratio of n-butyllithium to tetrahydrofuran is 1:(0.3-2.0), most preferably 1:(0.3-0.8).

3. The method according to claim 1, wherein in step (ii) a molar ratio of n-butyllithium to the modifier is 1:(0.25-1.50), more preferably 1:(0.25-0.50).

4. The method according to claim 1, wherein step (i) is carried out at a temperature ranging from 25 to 45°C, more preferably from 38 to 42°C, most preferably from 40 to 42°C.

5. The method according to claim 1, wherein step (ii) is carried out at a temperature of not more than 110°C, more preferably of from 40 to 103°C, most preferably of from 47 to 80°C.

6. The method according to claim 1, wherein the duration of step (i) is not more than 30 minutes, more preferably from 15 to 30 minutes.

7. The method according to claim 1, wherein the duration of step (ii) is not more than 40 minutes, more preferably from 30 to 40 minutes.

8. The method according to claim 1, wherein in step (ii) the modifier is added when the temperature of the reaction mixture is increased by 5- 20°C.

9. The method according to claim 1, wherein the hydrocarbon solvent is a mixture of cyclohexane/hexane or cyclohexane/petroleum solvent(nefras) at a weight ratio of from 25/75 to 35/65.

10. The method according to claim 1, wherein the coupling agent is diphenyldichlorosilane at a molar ratio of n-butyllithium:diphenyldichlorosilane of 1:(0.2-0.5),
more preferably 1:(0.3-0.5).

11. The method according to claim 1, wherein the coupling agent is silicon tetrachloride at a molar ratio of n-butyllithium: silicon tetrachloride of 1:(0.2-0.25), more preferably 1:(0.2-0.22).

12. A method according to claim 1, wherein in step (iii) the polystyrene-polybutadienyllithium block copolymer produced in step (ii) is treated with a coupling agent, which is diphenyldichlorosilane and/or silicon tetrachloride, at a molar ratio of n-butyllithium:coupling agent of 1:(0.2-0.5).

13. The method according to claims 12, wherein in step (i) a molar ratio of n-butyllithium to tetrahydrofuran is 1:(0.3- 2.0), most preferably 1:(0.3-0.8).

14. The method according to claim 12, wherein in step (i) a molar ratio of n-butyllithium:ethylene glycol ethylbutyl ether is 1:(0.3-0.8).

15. The method according to claim 12, wherein in step (i) a molar ratio of n-butyllithium:ethylene glycol ethylbutyl ether:tetrahydrofuran is 1:(0.1-0.5):(0.15-0.8), and the modifier is used in an amount of 0.005 to 0.02 wt.%.

16. The method according to claims 12, wherein in step (ii) a molar ratio of n-butyllithium:diethylene glycol dimethyl ether (diglyme) is 1:(0.25-1.50), more preferably 1:(0.25-0.50).

17. The method according to claim 12, wherein step (i) is carried out in an adiabatic mode.

18. The method according to claims 12, wherein step (i) is carried out at a temperature ranging from 25 to 45°C, more preferably from 38 to 42°C, most preferably from 40 to 42°C.

19. The method according to claims 12, wherein step (ii) is carried out at a temperature of not more than 110°C, more preferably of from 40 to 103°C, most preferably of from 47 to 80°C.

20. The method according to claim 12, wherein the duration of step (i) is not more than 30 minutes, more preferably from 15 to 30 minutes.

21. The method according to claims 12, wherein the duration of step (ii) is not more than 40 minutes, more preferably from 30 to 40 minutes.

22. The method according to claims 12, wherein in step (ii) the modifier is added when the temperature of the reaction mixture is increased by 5- 20°C.

23. The method according to claims 12, wherein the hydrocarbon solvent is a mixture of cyclohexane/hexane or cyclohexane/petroleum solvent(nefras) at a weight ratio of from 25/75 to 35/65.

24. The method according to claim 12, wherein in step (iii) the molar ratio of n-butyllithium:diphenyldichlorosilane is 1:(0.3-0.5).

25. The method according to claim 12, wherein in step (iii) the molar ratio of n-butyllithium:silicon tetrachloride is 1:(0.2-0.22).

## Patentansprüche

1. Verfahren zur Herstellung von Butadien-Styrol-Blockcopolymeren durch Copolymerisation von Styrol und Butadien in einem Kohlenwasserstofflösemittel in Gegenwart eines Organolithium-Initiators und Modifikators gefolgt von einer Behandlung von lebenden Polymerketten mit einem Haftvermittler, **dadurch gekennzeichnet, dass**
im Schritt (i) die Polymerisation von Styrol in Gegenwart eines n-Butyllithium und Modifikators durchgeführt wird, wobei der Modifikator aus der Gruppe ausgewählt ist, bestehend aus Tetrahydrofuran und Ethylenglykolethylbutylether, um einen Polystyrolblock von lebendem Polystyryllithium bereitzustellen, und
im Schritt (ii) Butadien dem im Schritt (i) erhaltenen Reaktionsgemisch zugefügt wird, und die Synthese von dem Polybutadienblock in Gegenwart eines Diethylenglykoldimethylether (Diglyme)-Modifikators durchgeführt wird, wobei der Modifikator nach Beginn der Butadien-Polymerisation zugefügt wird, um ein lebendes Polystyrol-Polybutadienyllithium-Blockcopolymer bereitzustellen.

2. Verfahren nach Anspruch 1, wobei im Schritt (i) das Molverhältnis von n-Butyllithium zu Tetrahydrofuran 1:(0,3-2,0), besonders bevorzugt 1:(0,3-0,8), ist.

3. Verfahren nach Anspruch 1, wobei im Schritt (ii) das Molverhältnis von n-Butyllithium zu dem Modifikator 1:(0,25-1,50), besonders bevorzugt 1:(0,25-0,50), ist.

4. Verfahren nach Anspruch 1, wobei der Schritt (i) bei einer Temperatur zwischen 25 und 45°C, bevorzugt zwischen 38 und 42°C, besonders bevorzugt zwischen 40 und 42°C, durchgeführt wird.

5. Verfahren nach Anspruch 1, wobei der Schritt (ii) bei einer Temperatur von nicht über 110°C, bevorzugt zwischen 40 und 103°C, besonders bevorzugt zwischen 47 to 80°C, durchgeführt wird.

6. Verfahren nach Anspruch 1, wobei die Dauer von Schritt (i) nicht länger als 30 Minuten, bevorzugt zwischen 15 und 30 Minuten, ist.

7. Verfahren nach Anspruch 1, wobei die Dauer von Schritt (ii) nicht länger als 40 Minuten, bevorzugt zwischen 30 und 40 Minuten, ist.

8. Verfahren nach Anspruch 1, wobei im Schritt (ii) der Modifikator zugefügt wird, wenn die Temperatur des Reaktionsgemisches um 5 bis 20°C erhöht wird.

9. Verfahren nach Anspruch 1, wobei das Kohlenwasserstofflösemittel eine Mischung von Cyclohexane/Hexane oder Cyclohexane/Mineralöllösemittel (Nefras) in einem Gewichtsverhältnis von 25/75 bis 35/65 ist.

10. Verfahren nach Anspruch 1, wobei der Haftvermittler Diphenyldichlorsilan ist, in einem Molverhältnis von n-Butyllithium:Diphenyldichlorsilan von 1:(0,2-0,5), bevorzugt 1:(0,3-0,5).

11. Verfahren nach Anspruch 1, wobei der Haftvermittler Siliciumtetrachlorid ist, in einem Molverhältnis von n-Butyllithium:Siliciumtetrachlorid von 1:(0,2-0,25), bevorzugt 1:(0,2-0,22).

12. Verfahren nach Anspruch 1, wobei im Schritt (iii) Polystyrol-Polybutadienyllithium-Blockcopolymer hergestellt im Schritt (ii) mit einem Haftvermittler behandelt wird, der Diphenyldichlorsilan und/oder Siliciumtetrachlorid in einem Molverhältnis von n-Butyllithium:Haftvermittler von 1:(0,2-0,5) ist.

13. Verfahren nach Anspruch 12, wobei im Schritt (i) das Molverhältnis von n-Butyllithium zu Tetrahydrofuran 1:(0,3-2,0), besonders bevorzugt 1:(0,3-0,8), ist.

14. Verfahren nach Anspruch 12, wobei im Schritt (i) das Molverhältnis von n-Butyllithium: Ethylenglykolethylbutylether 1:(0,3-0,8) ist.

15. Verfahren nach Anspruch 12, wobei im Schritt (i) das Molverhältnis von n-Butyllithium: Ethylenglykolethylbutylether:Tetrahydrofuran 1:(0,1-0,5):(0,15-0,8) ist, und der Modifikator in einer Menge von 0,005 bis 0,02 Gew.% verwendet wird.

16. Verfahren nach Anspruch 12, wobei im Schritt (ii) das Molverhältnis von n-Butyllithium:Diethylenglykoldimethylether (Diglyme) 1:(0,25-1,50), bevorzugt 1:(0,25-0,50), ist.

17. Verfahren nach Anspruch 12, wobei der Schritt (i) in einem adiabatischen Modus durchgeführt wird.

18. Verfahren nach Anspruch 12, wobei der Schritt (i) bei einer Temperatur zwischen 25 und 45°C, bevorzugt zwischen 38 und 42°C, besonders bevorzugt zwischen 40 und 42°C, durchgeführt wird.

19. Verfahren nach Anspruch 12, wobei der Schritt (ii) bei einer Temperatur von nicht über 110°C, bevorzugt zwischen 40 und 103°C, besonders bevorzugt zwischen 47 to 80°C, durchgeführt wird.

20. Verfahren nach Anspruch 12, wobei die Dauer von Schritt (i) nicht länger als 30 Minuten, bevorzugt zwischen 15 und 30 Minuten, ist.

21. Verfahren nach Anspruch 12, wobei die Dauer von Schritt (ii) nicht länger als 40 Minuten, bevorzugt zwischen 30 und 40 Minuten, ist.

22. Verfahren nach Anspruch 12, wobei im Schritt (ii) der Modifikator zugefügt wird, wenn die Temperatur des Reaktionsgemisches um 5 bis 20°C erhöht wird

23. Verfahren nach Anspruch 12, wobei das Kohlenwasserstofflösemittel eine Mischung von Cyclohexane/Hexane oder Cyclohexane/Mineralöllösemittel (Nefras) in einem Gewichtsverhältnis von 25/75 bis 35/65 ist.

24. Verfahren nach Anspruch 12, wobei im Schritt (iii) das Molverhältnis von n-Butyllithium: Diphenyldichlorsilan von 1:(0,2-0,5) ist.

25. Verfahren nach Anspruch 12, wobei im Schritt (iii) das Molverhältnis von n-Butyllithium:Siliciumtetrachlorid 1:(0,2-0,22) ist.

## Revendications

1. Procédé de production de copolymères à blocs butadiène-styrène par copolymérisation de styrène et de butadiène dans milieu de solvant hydrocarboné en présence d'un modificateur et initiateur et lithium-organique, suivi d'un traitement de chaînes polymères "vivantes" par un agent combinatoire, **caractérisé en ce que**
à l'étape (i), la polymérisation du styrène est effectuée en présence de n-butyllithium et d'un modificateur choisi dans le groupe consistant en tétrahydrofurane et éthylène glycol éthylbutyl éther pour produire un bloc polystyrène de polystyryllithium "vivant", et
à l'étape (ii), du butadiène est ajouté au mélange réactionnel obtenu à l'étape (i), et la synthèse d'un bloc polybutadiène est effectuée en présence d'un modificateur diéthylèneglycol diméthyléther (diglyme), ledit modificateur étant ajouté après le début de la polymérisation du butadiène pour produire un copolymère à blocs de polystyrène-polybutadiényllithium "vivant".

2. Procédé selon la revendication 1, dans lequel à l'étape (i) un rapport molaire du n-butyllithium au tétrahydrofurane est de 1:(0,3-2,0), le plus préférablement 1:(0,3-0,8).

3. Procédé selon la revendication 1, dans lequel à l'étape (ii) un rapport molaire du n-butyllithium au modificateur est de 1:(0,25-1,50), plus préférablement 1:(0,25-0,50).

4. Procédé selon la revendication 1, dans lequel l'étape (i) est réalisée à une température comprise entre de 25 à 45 °C, plus préférablement de 38 à 42 °C, le plus préférablement de 40 à 42 °C.

5. Procédé selon la revendication 1, dans lequel l'étape (ii) est réalisée à une température ne dépassant pas 110 °C, plus préférablement de 40 à 103 °C, le plus préférablement de 47 à 80 °C.

6. Procédé selon la revendication 1, dans lequel la durée de l'étape (i) n'est pas supérieure à 30 minutes, plus préférablement de 15 à 30 minutes.

7. Procédé selon la revendication 1, dans lequel la durée de l'étape (ii) n'est pas supérieure à 40 minutes, plus préférablement de 30 à 40 minutes.

8. Procédé selon la revendication 1, dans lequel à l'étape (ii) le modificateur est ajouté lorsque la température du mélange réactionnel est augmentée de 5 à 20 ° C.

9. Procédé selon la revendication 1, dans lequel le solvant hydrocarboné est un mélange de solvant(nefras) de cyclohexane/hexane ou de cyclohexane/pétrole à un rapport de poids de 25/75 à 35/65.

10. Procédé selon la revendication 1, dans lequel l'agent de couplage est le diphényldichlorosilane à un rapport molaire n-butyllithium:diphényldichlorosilane de 1:(0,2-0,5), plus préférablement de 1:(0,3-0,5).

11. Procédé selon la revendication 1, dans lequel l'agent de couplage est du tétrachlorure de silicium à un rapport molaire n-butyllithium: tétrachlorure de silicium de 1:(0,2-0,25), plus préférablement de 1:(0,2-0,22).

12. Procédé selon la revendication 1, dans lequel, à l'étape (iii), le copolymère à blocs polystyrène-polybutadiényllithium produit à l'étape (ii) est traité par un agent de couplage, qui est le diphényldichlorosilane et/ou le tétrachlorure de silicium, à un rapport molaire n-butyllithium: agent de couplage de 1:(0,2-0,5).

13. Procédé selon la revendication 12, dans lequel à l'étape (i) un rapport molaire du n-butyllithium au tétrahydrofurane est de 1:(0,3-2,0), de manière préférée de 1:(0,3-0,8).

14. Procédé selon la revendication 12, dans lequel à l'étape (i) un rapport molaire de n-butyllithium: éthylène glycol éthylbutyl éther est de 1:(0,3-0,8).

15. Procédé selon la revendication 12, dans lequel à l'étape (i) un rapport molaire n-butyllithium:éthylène glycol éthylbutyl éther:tétrahydrofurane est de 1:(0,1-0,5):(0,15-0,8), et le modificateur est utilisé en une quantité de 0,005 à 0,02% en poids.

16. Procédé selon la revendication 12, dans lequel à l'étape (ii) un rapport molaire n-butyllithium:diéthylèneglycol diméthyléther (diglyme) est de 1:(0,25-1,50), plus préférablement de 1:(0,25-0,50).

17. Procédé selon la revendication 12, dans lequel l'étape (i) est réalisée en mode adiabatique.

18. Procédé selon la revendication 12, dans lequel l'étape (i) est réalisée à une température comprise entre de 25 à 45 °C, plus préférablement de 38 à 42 °C, le plus préférablement de 40 à 42 °C.

19. Procédé selon la revendication 12, dans lequel l'étape (ii) est effectuée à une température ne dépassant pas 110 °C, plus préférablement de 40 à 103 °C, le plus préférablement de 47 à 80 °C.

20. Procédé selon la revendication 12, dans lequel la durée de l'étape (i) n'est pas supérieure à 30 minutes, plus préférablement de 15 à 30 minutes.

21. Procédé selon la revendication 12, dans lequel la durée de l'étape (ii) n'est pas supérieure à 40 minutes, plus préférablement de 30 à 40 minutes.

22. The method according to claims 12, wherein in step (ii) the modifier is added when the temperature of the reaction mixture is increased by 5-20°C.

23. Procédé selon les revendications 12, dans lequel le solvant hydrocarboné est un mélange de solvant(nefras) de cyclohexane/hexane ou de cyclohexane/pétrole dans un rapport de poids de 25/75 à 35/65.

24. Procédé selon la revendication 12, dans lequel à l'étape (iii) le rapport molaire n-butyllithium:diphényldichlorosilane est de 1:(0,3-0,5).

25. Procédé selon la revendication 12, dans lequel à l'étape (iii) le rapport molaire n-butyllithium:tétrachlorure de silicium est de 1:(0,2-0,22).
